(19)

Europäisches
Patentamt
European
Patent Office
Office européen
des brevets

(11) **EP 2 905 310 A1**

(12) **EUROPEAN PATENT APPLICATION**
published in accordance with Art. 153(4) EPC

(43) Date of publication:
**12.08.2015 Bulletin 2015/33**

(21) Application number: **13844094.6**

(22) Date of filing: **17.09.2013**

(51) Int Cl.:
**C08L 27/08** (2006.01)     **C08F 214/08** (2006.01)

(86) International application number:
**PCT/JP2013/075009**

(87) International publication number:
**WO 2014/054413 (10.04.2014 Gazette 2014/15)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **01.10.2012 JP 2012219425**

(71) Applicant: **Kureha Corporation
Tokyo 103-8552 (JP)**

(72) Inventors:
• **IIZUKA, Hitoshi
Tokyo 103-8552 (JP)**

• **MOCHIMARU, Tomohide
Tokyo 103-8552 (JP)**
• **IKEDA, Tsukasa
Tokyo 103-8552 (JP)**
• **ORIKASA, Takanori
Tokyo 103-8552 (JP)**
• **MATSUZAKI, Mitsuhiro
Tokyo 103-8552 (JP)**

(74) Representative: **Zimmermann & Partner
Patentanwälte mbB
Postfach 330 920
80069 München (DE)**

(54) **VINYLIDENE CHLORIDE-BASED COPOLYMER RESIN COMPOSITION AND MOLDED PRODUCT THEREOF**

(57)     The object of the present invention is to provide a vinylidene chloride-based copolymer resin composition having excellent extrusion workability while using a minimum additive amount of liquids such as plasticizers, stabilizers, adhesives, and tackifiers, and a molded article thereof.

The vinylidene chloride-based copolymer resin composition of the present invention is characterized in that, when the composition is in the form of a film and when the film is subjected to methanol extraction and then the film after methanol extraction is subjected to acetone extraction, the acetone extraction amount is 4.0 mass% or greater, and the weight-average molecular weight of the acetone extract is 50,000 or less.

EP 2 905 310 A1

**Description**

TECHNICAL FIELD

The present invention relates to a resin composition for extrusion-molding a vinylidene chloride-based copolymer resin and a molded product thereof.

BACKGROUND ART

Known methods of improving the workability of a vinylidene chloride-based copolymer resin composition include (1) a method of adding plasticizers and stabilizers and (2) a method of blending two different types of high molecular weight and low molecular weight polyvinylidene chloride-based resins (for example, see Patent Document 1 or 2).
In addition, a known method of improving the adhesion performance (self-adhesion) of a wrap film comprising a vinylidene chloride-based copolymer resin composition is a method of adding a mineral oil having a molecular weight distribution and a number-average molecular weight within specific ranges (for example, see Patent Document 3).

CITATION LISTS

Patent Documents

Patent Document 1: Japanese Unexamined Patent Application Publication No. H11-71492A
Patent Document 2: Japanese Unexamined Patent Application Publication No. H07-179703A
Patent Document 3: Japanese Unexamined Patent Application Publication No. H10-87876A
Patent Document 4: Japanese Unexamined Patent Application Publication No. H10-324809A

SUMMARY OF INVENTION

Technical Problem

Vinylidene chloride-based copolymer resins have a similar melting temperature and decomposition temperature, which makes molding processing difficult. Therefore, liquid additives such as plasticizers and stabilizers are added in order to provide extrusion melting workability, but when large amounts of additives are used, bleeding occurs in the molded article.
In addition, as in the invention described in Patent Document 1 or 2, in a method using two types of mixed resins, the producibility is diminished since two types of resins need to be produced, and measuring equipment or mixing equipment becomes necessary to mix the two types of resins.
In the case of a wrap film, as described in Patent Document 3, a tackifier such as fluid paraffin (mineral oil) is added in order to provide adhesiveness to the container. In addition, the addition of polybutene or polybutadiene as an adhesive and fluid paraffin or a surfactant as a tackifier is described in Patent Document 4.
Therefore, an object of the present invention is to provide a vinylidene chloride-based copolymer resin composition having excellent extrusion workability while using a minimum additive amount of liquids such as plasticizers, stabilizers, adhesives, and tackifiers, without mixing two types of resins, and a molded article thereof.

Solution to Problem

As a result of conducting dedicated research, the present inventors discovered that when a large amount of compounds having a molecular weight within a specific range is intentionally included in a vinylidene chloride-based copolymer resin composition, this compound functions as a plasticizer and, as a result, improves extrusion workability, and the present inventors thereby completed the present invention. The vinylidene chloride-based copolymer resin composition of the present invention is characterized in that, when the composition is in the form of a film and when the film is subjected to methanol extraction and then the film after methanol extraction is subjected to acetone extraction, the acetone extraction amount is 4.0 mass% or greater, and the weight-average molecular weight of the acetone extract is 50,000 or less.
The vinylidene chloride-based copolymer resin composition of the present invention is preferably a vinylidene chloride-vinyl chloride copolymer resin composition.
In the vinylidene chloride-based copolymer resin composition of the present invention, the methanol extraction amount at the time of methanol extraction is preferably 10.0 mass% or less. The methanol extract primarily includes plasticizers, stabilizers, adhesives, and tackifiers, but the extrusion workability can be improved by including a large amount of the compound having a greater molecular weight within a specific range.

In the vinylidene chloride-based copolymer resin composition of the present invention, it is preferable that (1) the polymerization conversion is at least 88% when the vinylidene chloride content ratio determined by vinylidene chloride/(vinylidene chloride + vinyl chloride) is at least 80 mass% and at most 98 mass%, (2) the polymerization conversion is at least 83% and less than 88% when the vinylidene chloride content ratio is at least 75 mass% and less than 80 mass%, and (3) the polymerization conversion is at least 75% and less than 83% when the vinylidene chloride content ratio is at least 70 mass% and less than 75 mass%. Good extrusion workability can be achieved by increasing the polymerization conversion of the vinylidene chloride-based copolymer resin to a level higher than normal and containing a relatively large amount of the compound with a molecular weight within a specific range in comparison to conventional methods.

In the vinylidene chloride-based copolymer resin composition of the present invention, the weight-average molecular weight of the acetone extract is at least 26,000.

The vinylidene chloride-based copolymer resin composition of the present invention may be a resin composition for a wrap film. The vinylidene chloride-based copolymer resin composition of the present invention is optimal for this application since it has high container adhesiveness when used as a wrap film, even without the addition of adhesives and tackifiers.

A molded product of the present invention such as a film, a sheet, or a fiber contains the vinylidene chloride-based copolymer resin composition of the present invention.

Advantageous Effects of Invention

The present invention is able to provide a vinylidene chloride-based copolymer resin composition having excellent extrusion workability while using a minimum additive amount of liquids such as plasticizers, stabilizers, adhesives, and tackifiers, and a molded article thereof.

Description of Embodiments

Next, embodiments of the present invention will be described in detail, but the present invention shall not be interpreted as being limited to the descriptions thereof. Various variations may also be made in the embodiments as long as the effect of the present invention is exhibited.

When the vinylidene chloride-based copolymer resin composition of this embodiment is in the form of a film and when the film is subjected to methanol extraction and then the film after methanol extraction is subjected to acetone extraction, the acetone extraction amount is 4.0 mass% or greater, and the weight-average molecular weight (Mw) of the acetone extract is 50,000 or less.

The vinylidene chloride-based copolymer resin composition of this embodiment contains (1) a vinylidene chloride-based copolymer as a main component, (2) a compound having a molecular weight within a specific range, and (3) additives compounded as necessary.

When the vinylidene chloride-based copolymer resin composition of this embodiment is molded into a film, some of the volatile components in the composition are volatilized by heating at the time of molding. When methanol extraction is performed on the molded film, the additives such as plasticizers, adhesives, tackifiers, and stabilizers are primarily eluted in methanol. When the film after methanol extraction is further subjected to acetone extraction, a compound having a molecular weight within a specific range is eluted in acetone. A vinylidene chloride-based copolymer then primarily remains in the film after acetone extraction.

The physical properties of a molded article such as a wrap film were conventionally adjusted by compounding additives such as plasticizers, adhesives, tackifiers, and stabilizers in a vinylidene chloride-based copolymer resin composition. It was discovered that the compound having a molecular weight within a specific range functions as a plasticizer and further functions as adhesives and a tackifier, and these functions are utilized in this embodiment. In other words, a large amount of this compound is included in the resin composition, and in exchange, the compounding of additives such as plasticizers, adhesives, and tackifiers is reduced or eliminated.

The vinylidene chloride-based copolymer may include from 60 to 98 parts by mass of vinylidene chloride and from 2 to 40 parts by mass of at least one type of monomers that are copolymerizable with vinylidene chloride. Representative examples thereof include vinyl chloride, alkyl acid esters with alkyl groups having from 1 to 8 carbon atoms, methacrylic acid esters with alkyl groups having from 1 to 8 carbon atoms, vinyl esters of aliphatic carboxylic acids, and unsaturated aliphatic carboxylic acids, but vinyl chloride, methyl acrylate, and butyl acrylate are preferably used. The vinylidene chloride-based copolymer is typically produced with a suspension polymerization method or an emulsion polymerization method, and a suspension polymerization method is preferable.

The vinylidene chloride content of the vinylidene chloride-based copolymer that is used is preferably at least 70 mass% and more preferably at least 80 mass% from the perspective of a balance between the extrusion workability and gas barrier properties when molding a film.

Known additives such as plasticizers, stabilizers, adhesives, tackifiers, pigments, lubricants, antioxidants, fillers, and surfactants may be compounded as additives. Specifically, examples of liquid plasticizers include acetyl tributyl citrate (ATBC), dibutyl sebacate cetyl tributyl citrate, glycerine diacetyl monolaurate (GDAML), dibutyl sebacate (DBS), dioctyl sebacate, and diacetylated monoglyceride (DALG); examples of adhesives include polyhydric alcohols such as polyisobutylene (PIB), polybutene (PB), polybutadiene, polyethylene glycol, polyglycerine, and polypropylene glycol; examples of tackifiers include sorbitan fatty acid esters, propylene glycol fatty acid esters, glycerin fatty acid esters, surfactants such as sorbitan mono(tri)oleate and glycerin mono(tri)oleate, for example, and paraffin- or cycloparaffin-based liquid saturated hydrocarbons such as naphthene-based process oil, paraffin wax, and fluid paraffin (mineral oil). Examples of stabilizers include epoxidized oils such as epoxidized soy bean oil (ESBO) and epoxidized linseed oil (ELO); other examples of stabilizers include amide derivatives of alkyl esters, magnesium hydroxide, and tetrasodium pyrophosphate; examples of lubricants include polyethylene oxide and waxes such as paraffin wax; examples of fillers include silicon oxide and calcium carbonate; and examples of surfactants include sorbitan fatty acid esters and the like.

In this embodiment, container adhesiveness is achieved even when adhesives and tackifiers are not added or when the compounding thereof is kept to a minimum. Accordingly, even if these additives are compounded, a small amount is sufficient, and the adhesive content may be set to less than 0.1 mass% and preferably at most 0.05 mass% in the resin composition. In addition, the tackifier content may be set to less than 0.1 mass% and preferably at most 0.05 mass% in the resin composition.

Next, the compound having a molecular weight within a specific range will be described. As described above, this compound is the compound that is subjected to acetone extraction when film molding, methanol extraction, and acetone extraction are sequentially performed on the vinylidene chloride-based copolymer resin composition, and the weight-average molecular weight (Mw) is at most 50,000 and preferably at most 40,000. The weight-average molecular weight is preferably at least 26,000 and more preferably at least 30,000. This compound has a weight-average molecular weight of at most 50,000, which is low in comparison to the molecular weight of a vinylidene chloride-based copolymer (for example, a weight-average molecular weight of from 80,000 to 300,000). Therefore, this compound functions as a plasticizer and improves extrusion workability. In addition, this compound also functions as an adhesive and a tackifier and improves the container adhesiveness when forming a wrap film, even if adhesives and tackifiers are not added or the use thereof is kept to a minimum. When the weight-average molecular weight exceeds 50,000, the plasticizer action, and the adhesive or tackifier action are diminished. The acetone extraction amount is at least 4.0 mass%. When the acetone extraction amount is less than 4.0 mass%, the amount is too small, which diminishes the plasticizer action and extrusion workability. In addition, the adhesive or tackifier action is also diminished. The acetone extraction amount is preferably less than 10.0 mass%, more preferably at most 9.0 mass%, and even more preferably at most 8.0 mass%. When the acetone extraction amount is 10.0 mass% or greater, the content of the vinylidene chloride-based copolymer in the resin composition is relatively reduced, which tends to make the film sticky, and when formed into a rolled product, for example, the adhesiveness of the film is too strong, resulting in the problem that the film cannot be drawn out.

In this embodiment, the methanol extraction amount at the time of methanol extraction is preferably at most 10.0 mass%, more preferably at most 9.0 mass%, and even more preferably at most 8.0 mass%. The methanol extract primarily includes plasticizers, adhesives, tackifiers, and stabilizers. In this embodiment, the acetone extraction amount is at least 4.0 mass%, so in exchange, the compounding of plasticizers, adhesives, tackifiers, and stabilizers can be reduced. As a result, the methanol extraction amount is at most 10.0 mass%. Even when the methanol extraction amount is at most 10.0 mass%, the extrusion workability can be improved by including a large amount of the compound having a greater molecular weight within a specific range.

In this embodiment, when the vinylidene chloride content ratio determined by vinylidene chloride/(vinylidene chloride + vinyl chloride) is at least 80 mass% and at most 98 mass%, the polymerization conversion is preferably at least 88% and more preferably at least 90%. In addition, when the vinylidene chloride content ratio is at least 75 mass% and less than 80 mass%, the polymerization conversion is preferably at least 83% and less than 88%. Further, when the vinylidene chloride content ratio is at least 70 mass% and less than 75 mass%, the polymerization conversion is preferably at least 75% and less than 83%. The polymerization conversion of the vinylidene chloride-based copolymer resin is increased to a level higher than normal, and as a result, a relatively large amount compound with a molecular weight within a specific range is contained in comparison to conventional methods, which makes it possible to achieve good extrusion workability.

The vinylidene chloride-based copolymer resin composition of this embodiment may be a resin composition for a wrap film. The vinylidene chloride-based copolymer resin composition of the present invention is optimal for this application since it has high container adhesiveness when used as a wrap film, even if adhesives and tackifiers are not added or the use thereof is kept to a minimum.

A molded product of this embodiment such as a film, a sheet, or a fiber may be not only a molded product molded from the vinylidene chloride-based copolymer resin composition of this embodiment, but also a molded product formed by mixing other resins with this resin composition. When a molded product is obtained by mixing other resins with this resin composition, the compounding ratio of this resin composition is, for example, at least 50 mass% and preferably at least 80 mass%, although the ratio differs depending on the type of the molded product.

Next, the production method of the vinylidene chloride-based copolymer resin composition of this embodiment will be described. This production method is an illustrative example, and the present invention is not limited to this method. Vinylidene chloride (VD) and vinyl chloride, which serve as raw materials for a polymerization reaction, are mixed at a prescribed charging ratio, and a vinylidene chloride-based copolymer is synthesized by a suspension polymerization method, for example, in the presence of a catalyst. At this time, suspension polymerization is performed with temperature management 1. Temperature management 1 is a case in which, when divided into an initial stage of polymerization, an intermediate stage of polymerization, and a late stage of polymerization, the heating rate in the intermediate stage of polymerization is higher than the heating rate in the initial stage of polymerization and the late stage of polymerization. Temperature management 2 is a modified example of temperature management 1. Temperature management 2 is a case in which, when divided into an initial stage of polymerization, an intermediate stage 1 of polymerization, an intermediate stage 2 of polymerization, an intermediate stage 3 of polymerization, and a late stage of polymerization, the heating rate in the intermediate stage 1 of polymerization and the intermediate stage 3 of polymerization are higher than the heating rate in the initial stage of polymerization, the intermediate stage 2 of polymerization, and the late stage of polymerization. In this embodiment, the temperature management can be modified as long as the method includes a stage in which the heating rate is higher than in the other stages. In addition, since a polymerization reaction involves heat generation, the initial stage of polymerization may involve a gradual increase in temperature, and cooling may be performed in the late stage of polymerization so that the temperature does not increase excessively. Further, constant rate heating or a method similar to constant rate heating may be used as temperature management 3.

The vinylidene chloride-based copolymer resin composition of this embodiment is obtained by adding additives as necessary to the resulting copolymer resin.

The vinylidene chloride-based copolymer resin composition of this embodiment is melt-extruded and molded into a stretched or unstretched film, sheet, or wrap film. An example of a molding method is an inflation extrusion molding method using a circular die, which is known to those skilled in the art. In addition, the obtained film may be positioned as a gas barrier layer to form a multilayer film or a sheet using a coextrusion method or a lamination method.

EXAMPLES

Next, the present invention will be described in further detail with reference to working examples, but the present invention shall not be interpreted as being limited to the working examples.

- Measurement method -

<Reduced viscosity>

1 g of the vinylidene chloride-based copolymer resin composition is added to 50 ml of tetrahydrofuran and dissolved at 40°C. After filtration, a polymer is precipitated by methanol, washed, and dried. Next, 80 mg of the dried polymer is measured, and 20 ml of 30°C cyclohexanone is added as a solvent and dissolved while heating for 60 minutes at 70°C. After cooling at room temperature, the solution is filtered with filter paper to form a sample solution for solution viscosity measurements. The reduced viscosity was determined by the following formula (Formula 1) by placing 5 ml of the sample solution in an Ubbelohde viscometer, letting the solution stand for 5 minutes in a 30°C constant-temperature tank, and measuring the number of seconds of downward flow with a conventional method.

$$\text{(Formula 1) Reduced viscosity} = (1/4) \times \{(T2/T1) - 1\}$$

$T_1$: number of seconds (sec) of downward flow of 30°C cyclohexanone (solvent)
$T_2$: number of seconds (sec) of downward flow of 30°C sample solution

<Extrusion workability - 1>

A film with a thickness of 25 $\mu$m and a width of approximately 110 mm was prepared by melt-extruding the sample into a ring shape using a single-screw extruder at a resin temperature of approximately 185°C, rapidly cooling the sample in a 10°C cooling bath, and performing biaxial stretching by inflation at room temperature. The load (A) when the screw revolution speed of the single-screw extruder was set to 14 rpm at the time of melt extrusion was defined as the EXT load, and the stability of the load after extrusion for 30 minutes was evaluated by the following criteria.

○: the fluctuation in load is less than ±1A (suitable for practical application)
Δ: the fluctuation in load is in the range of ±1A to ±2A (lower limit of practical application)
✕: the fluctuation in load is ±2A or greater (unsuitable for practical application)

<Extrusion workability - 2>

(Foreign substance evaluation)

A running film (double film) with a total thickness of 40 $\mu$m and a width of 1250 mm was prepared by melt-extruding the sample into a ring shape using a single-screw extruder at a resin temperature of approximately 185°C, rapidly cooling in a 10°C cooling bath, and performing biaxial stretching by inflation at room temperature. Using an optical defect detection device (made by FUTEC) which detects foreign substances by illuminating the film with a projector, capturing a negative image of the light with a light receiver, and performing signal processing, foreign substances of a size of 0.5 mm x 0.5 mm or greater were investigated over a film length of 1200 m. The number of foreign substances at this time was evaluated by the following criteria.

○: 30 or less (suitable for practical application)
Δ: 31 to 100 (lower limit of practical application)
✕: 101 or more (unsuitable for practical application)

(EXT load fluctuation evaluation)

A film with a total thickness of 40 $\mu$m and a width of approximately 1250 mm was prepared by melt-extruding the sample into a ring shape using a screw extruder at a resin temperature of approximately 185°C, rapidly cooling the sample in a 10°C cooling bath, and performing biaxial stretching by inflation at room temperature. The winding speed was 20 m/minute. The load (A) when the screw revolution speed of the single-screw extruder was set to 34 rpm at the time of melt extrusion was defined as the EXT load, and the stability of the load after extrusion for 60 minutes was evaluated by the following criteria.

o : the fluctuation in load is less than ±1.5 A (suitable for practical application)
✕: the fluctuation in load is ±1.5 A or greater (unsuitable for practical application)

<Methanol extraction amount>

5 g of a sample (film) is immersed and dissolved in 100 ml of THF (tetrahydrorufan) at 60°C. The sample is re-precipitated by gradually dropping 500 ml of methanol while stirring the THF solution in which the sample was dissolved. After the solvent of this mixed solution is dried up at 90°C, 50 ml of methanol is added. The solution, including the re-precipitated sample, is placed in a Soxhlet extractor, and absorbent cotton is placed on the upper part thereof. Next, 70 ml of methanol is placed in a 150 ml flat-bottom flask that has been dried and weighed in advance, and this is attached to the Soxhlet extractor and extruded for 24 hours at 85°C. The flat-bottom flask is retrieved, and after the solvent is dried up at 90°C, the flat-bottom flask is dried for one hour with a dryer adjusted to 105°C. This is left to cool for one hour with a desiccator, and the mass of the flask containing the extract is determined. The methanol extraction amount was determined by the following formula (Formula 2).

$$\text{(Formula 2) Methanol extraction amount \% = (B - A) / C x 100\%}$$

A: mass of the flask (g)
B: mass of the flask containing the extract (g)
C: mass of the sample (g) (mass of 5 g)

<Acetone extraction amount>

The sample after methanol extraction (this refers to the sample remaining after the film is dissolved, re-precipitated, and then subjected to methanol extraction in the methanol extraction operation; in the specification of this application, this is also expressed as the "film after methanol extraction") is placed in a Soxhlet extractor after absorbent cotton was placed on the upper part thereof. Next, 120 ml of acetone is placed in a flat-bottom flask, and this is attached to the Soxhlet extractor and extruded for 24 hours at 75°C. Next, 100 ml of the extract liquid is filtered into a graduated cylinder with filter paper No. 5A (conforming to "JIS P 3801-1995 filter paper (for chemical analysis)") and placed in a 150 ml flat-bottom flask that has been dried and weighed in advance. The graduated cylinder that is used is washed with carbon tetrachloride, and the washing is added to the flat-bottom flask. The acetone is dried up using a Soxhlet extractor in a constant-temperature water tank adjusted to 80°C. The sample is then dried for one hour with a dryer adjusted to 105°C and left to cool for one hour with a desicator, and the mass of the flask containing the extract is determined. The acetone extraction amount was determined by the following formula (Formula 3).

$$\text{(Formula 3) Acetone extraction amount \%} = \{(A - B) \times E/(C \times D)\} \times 100\%$$

A: mass of the flask containing the extract (g)
B: mass of the flask (g)
C: mass of the sample (g) (C in Formula 2; mass of 5 g)
D: 100 (ml) (amount of extract liquid recovered after filtration with the Soxhlet extractor)
E: 120 (ml) (amount of acetone used for extraction)

<Measurement of weight-average molecular weight>

First, 30 mg of an acetone extract is measured in an erlenmeyer flask with a screw cap, and 30 ml of tetrahydrofuran is added. This is placed in a 50°C dryer for 30 minutes and dissolved. After cooling to room temperature, the solution is then filtered with a 0.45 $\mu$m filter. The filtrate is injected into a liquid chromatogram, and the weight-average molecular weight is measured.

Column: KF806M + KF802 + KF801 (made by Showa Denko)
Pump: model GL-7410 (made by GL Sciences)
Detector: RI model GL-7454 (made by GL Sciences)
Temperature: 40°C
Injection rate: 300 $\mu$l

<Polymerization conversion>

The polymerization conversion was determined from the following formula (Formula 4).

$$\text{(Formula 4) Polymerization conversion \%} = (A - B)/C \times 100\%$$

A: mass of recovered polymer (g)
B: total mass of liquid additives (g)
C: mass of vinylidene chloride monomer (g) + mass of vinyl chloride monomer (g)

<Two-layer delamination time of the film>

A double film of the vinylidene chloride-based copolymer resin composition with a width of 50 mm and a length of 100 mm is prepared. A weight with a load of 3 g is attached to one side of the double film, and the time required for the double film 100 mm in length to be completely peeled is measured. Average value of N = 5. Cases in which the time was 20 seconds or longer were assessed as passing, and cases in which the time was less than 20 seconds were assessed as failing.

<Wrap container adhesiveness>

The adhesive strength with the container was measured using the sample films created in Extrusion Workability - 1 and - 2. The content of the measurement was as follows. The outer surface of a single film was made to cover a teacup with an outside diameter of 72.5 mm (Kasama ware) so as to be in contact with the container, and the film was attached to the teacup from above the film with a constant force though a hole of a piece of thick paper with a thickness of 1 mm in which a hole with an inside diameter of 75 mm was opened. The teacup was placed on a 20 kg platform scale in this state, and a jig was pressed against the film in the center of the teacup in an orthogonal direction at a rate of 300 mm/min so that a flat surface with a diameter of 30 mm made contact with the film. The maximum load when the film slipped off of the container was read visually and used as the adhesive force. Average value of N = 5. Cases in which the value was 0.1 kg or greater were assessed as passing, and cases in which the value was less than 0.1 kg were assessed as failing.

(Working Example 1)

Vinylidene chloride (VD) and vinyl chloride (VC) were mixed as monomers to be polymerized at a ratio of vinylidene chloride: vinyl chloride = 83:17 (mass ratio), and suspension polymerization was performed with temperature management 1 under conditions in which the sample was maintained for 20 hours at a polymerization initial stage temperature of from 45 to 50°C, heated, and then maintained at a polymerization late stage temperature of 60°C. The polymerization time was 28 hours. The polymerization conversion at this time was 90.7%. A total of 7 parts by mass of ATBC, GDAML, and ELO and a total of 0.16 parts by mass of adhesives and tackifiers were added and mixed as additives with 100 parts by mass of this polymerized resin (vinylidene chloride-based copolymer) to form a compound (vinylidene chloride-based copolymer resin composition). Next, a film with a thickness of 25 μm and a width of 110 mm was prepared by melt-extruding the sample into a ring shape using a single-screw extruder at a resin temperature of approximately 185°C, rapidly cooling the sample in a 10°C cooling bath, and performing biaxial stretching by inflation at room temperature. The reduced viscosity of the polymerized resin, the methanol extraction amount and the acetone extraction amount of the sample film, and the molecular weight of the acetone extract were measured and shown in Table 1. Further, the fluctuation evaluation results, the adhesive strength of the film, and the two-layer delamination time were measured and shown in Table 1 as indices of the EXT load and stability described in Extrusion Workability - 1.

(Working Example 2)

In Working Example 1, a polymerized resin was prepared using VD: VC = 82:18 (mass ratio). At this time, suspension polymerization was performed with temperature management 1 under conditions in which the sample was maintained for 20 hours at a polymerization initial stage temperature of from 45 to 50°C, heated, and then maintained at a polymerization late stage temperature of 60°C. The polymerization time was 27 hours. The polymerization conversion at this time was 90.0%. Next, the same amounts of additives as in Working Example 1 were mixed to prepare a compound, and a film was prepared and evaluated under the same conditions as in Working Example 1.

(Working Example 3)

Working Example 3 was executed in the same manner as in Working Example 2 with the exception of performing the suspension polymerization in Working Example 2 under conditions in which the sample was maintained for 20 hours at a polymerization initial stage temperature of from 42 to 48°C, heated, and then maintained at a polymerization late stage temperature of 60°C, and setting the polymerization time to 27 hours. The polymerization conversion at this time was 89.9%.

(Working Example 4)

Working Example 4 was executed in the same manner as in Working Example 2 with the exception of performing the suspension polymerization in Working Example 2 under conditions in which the sample was maintained for 20 hours at a polymerization initial stage temperature of from 48 to 53°C, heated, and then maintained at a polymerization late stage temperature of 62°C, and setting the polymerization time to 28 hours. The polymerization conversion at this time was 90.3%.

(Working Example 5)

In Working Example 1, a polymerized resin was prepared using VD: VC = 82:18 (mass ratio). At this time, suspension polymerization was performed under conditions in which the sample was maintained for 20 hours at a polymerization initial stage temperature of from 45 to 50°C, heated, and then maintained at a polymerization late stage temperature of 60°C. The polymerization time was 27 hours. The polymerization conversion at this time was 91.1%. Next, without adding adhesives and tackifiers, the same amounts of additives as in Working Example 1 were mixed to prepare a compound, and a film was prepared and evaluated under the same conditions as in Working Example 1.

(Working Example 6)

In Working Example 1, a polymerized resin was prepared using VD: VC = 82:18 (mass ratio), and the same amounts of additives as in Working Example 1 were mixed to form a compound. At this time, suspension polymerization was performed with temperature management 1 under conditions in which the sample was maintained for 20 hours at a polymerization initial stage temperature of from 44 to 50°C, heated, and then maintained at a polymerization late stage temperature of 62°C. The polymerization time was 28 hours. The polymerization conversion at this time was 93.6%. Next, a film was prepared and evaluated under the same conditions as in Working Example 1.

(Comparative Example 1)

Vinylidene chloride (VD) and vinyl chloride (VC) were mixed as monomers to be polymerized at a ratio of vinylidene chloride: vinyl chloride = 83:17 (mass ratio), and suspension polymerization was performed with temperature management 3 under conditions with a polymerization initial stage temperature of at most 52°C, a polymerization late stage temperature of from 57 to 60°C, and a polymerization time of 26 hours. The polymerization conversion at this time was 87.0%. A total of 7 parts by mass of ATBC, GDAML, and ELO and 0.16 parts by mass of adhesives and tackifiers were added and mixed as additives with 100 parts by mass of this polymerized resin (vinylidene chloride-based copolymer) to form a compound (vinylidene chloride-based copolymer resin composition). Next, a film with a thickness of 25 μm and a width of 110 mm was prepared by melt-extruding the sample into a ring shape using a single-screw extruder at a resin temperature of approximately 185°C, rapidly cooling the sample in a 10°C cooling bath, and performing biaxial stretching by inflation at room temperature. Evaluations were performed in the same manner as in Working Example 1.

(Comparative Example 2)

Comparative Example 2 was executed in the same manner as in Comparative Example 1 with the exception of mixing vinylidene chloride (VD) and vinyl chloride (VC) at a ratio of vinylidene chloride: vinyl chloride = 82:18 (mass ratio) and performing suspension polymerization under conditions with a polymerization initial stage temperature of at most 47°C, a polymerization late stage temperature of from 57 to 60°C, and a polymerization time of 27 hours. The polymerization conversion at this time was 86.4%.

(Working Example 7)

Vinylidene chloride (VD) and vinyl chloride (VC) were mixed as monomers to be polymerized at a ratio of vinylidene chloride: vinyl chloride = 83:17 (mass ratio), and at this time, suspension polymerization was performed with temperature management 1 under conditions in which the sample was maintained for 20 hours at a polymerization initial stage temperature of from 40 to 45°C, heated, and then maintained at a polymerization late stage temperature of 60°C. The polymerization time was 28 hours. The polymerization conversion at this time was 93.0%. A total of 7 parts by mass of ATBC, GDAML, and ESBO were mixed as additives with 100 parts by mass of this polymerized resin (vinylidene chloride-based copolymer) to form a compound without adhesives and tackifiers (vinylidene chloride-based copolymer resin composition). Next, a film with a total thickness of 40 μm and a width of 1250 mm was prepared by melt-extruding the sample into a ring shape using a single-screw extruder at a resin temperature of approximately 185°C, rapidly cooling the sample in a 10°C cooling bath, and performing biaxial stretching by inflation at room temperature. The results of measuring the reduced viscosity of the polymerized resin, the methanol extraction amount and the acetone extraction amount of the sample film, and the molecular weight of the acetone extract are shown in Table 2. Further, the results of foreign substance evaluations in Extrusion Workability - 2, the results of stability evaluations of the EXT load, the adhesive strength of the film, and the two-layer delamination time were measured and shown in Table 2.

(Working Example 8)

Vinylidene chloride (VD) and vinyl chloride (VC) were mixed as monomers to be polymerized at a ratio of vinylidene chloride: vinyl chloride = 82:18 (mass ratio), and at this time, suspension polymerization was performed with temperature management 1 under conditions in which the sample was maintained for 20 hours at a polymerization initial stage temperature of from 40 to 45°C, heated, and then maintained at a polymerization late stage temperature of 60°C. The polymerization time was 28 hours. The polymerization conversion at this time was 91.1%. A total of 9 parts by mass of ATBC, GDAML, and ESBO were mixed as additives with 100 parts by mass of this polymerized resin to form a compound without adhesives and tackifiers (vinylidene chloride-based copolymer resin composition). The film preparation and evaluations were performed in the same manner as in Working Example 7.

(Working Example 9)

Vinylidene chloride (VD) and vinyl chloride (VC) were mixed as monomers to be polymerized at a ratio of vinylidene chloride: vinyl chloride = 82:18 (mass ratio), and at this time, suspension polymerization was performed with temperature management 1 under conditions in which the sample was maintained for 20 hours at a polymerization initial stage temperature of from to 45 to 50°C, heated, and then maintained at a polymerization late stage temperature of 60°C. The polymerization time was 28 hours. The polymerization conversion at this time was 93.6%. A total of 9 parts by mass of ATBC, GDAML, and ESBO were mixed as additives with 100 parts by mass of this polymerized resin (vinylidene chloride-based copolymer) to form a compound without adhesives and tackifiers (vinylidene chloride-based copolymer resin composition). The film preparation and evaluations were performed in the same manner as in Working Example 7.

(Working Example 10)

A polymerized resin was prepared under copolymerization conditions with the same ratio of vinylidene chloride: vinyl chloride = 82:18 (mass ratio) as in Working Example 8. The polymerization conversion at this time was 92.0%. A total of 4.6 parts by mass of DBS, ATBC, and ESBO were mixed with 100 parts by mass of this polymerized resin (vinylidene chloride-based copolymer) to form a compound without adhesives and tackifiers (vinylidene chloride-based copolymer resin composition). Next, a film was prepared and evaluated with the same methods as in Working Example 8.

(Comparative Example 3)

Vinylidene chloride (VD) and vinyl chloride (VC) were mixed as monomers to be polymerized at a ratio of vinylidene chloride: vinyl chloride = 82:18 (mass ratio), and suspension polymerization was performed with temperature management 3 under conditions with a polymerization initial stage temperature of at most 47°C and a polymerization late stage temperature of from 57 to 60°C. The polymerization time was 27 hours. The polymerization conversion at this time was 86.6%. A total of 7 parts by mass of ATBC, GDAML, and ESBO were added and mixed as additives with 100 parts by mass of this polymerized resin (vinylidene chloride-based copolymer) to form a compound (vinylidene chloride-based copolymer resin composition). Next, a film with a total thickness of 40 μm and a width of 1250 mm was prepared by melt-extruding the sample into a ring shape using a single-screw extruder at a resin temperature of approximately 185°C, rapidly cooling the sample in a 10°C cooling bath, and performing biaxial stretching by inflation at room temperature. The evaluation of the film was performed in the same manner as in Working Example 7.

(Comparative Example 4)

Vinylidene chloride (VD) and vinyl chloride (VC) were mixed as monomers to be polymerized at a ratio of vinylidene chloride: vinyl chloride = 82:18 (mass ratio), and suspension polymerization was performed with temperature management 3 under conditions with a polymerization initial stage temperature of at most 37°C and a polymerization late stage temperature of from 52 to 54°C. The polymerization time was 38 hours. The polymerization conversion at this time was 86.6%. A total of 9 parts by mass of ATBC, GDAML, and ESBO were added and mixed as additives to 100 parts by mass of this polymerized resin (vinylidene chloride-based copolymer) to form a compound (vinylidene chloride-based copolymer resin composition). The film preparation and evaluations were performed in the same manner as in Comparative Example 3.

(Comparative Example 5)

Vinylidene chloride (VD) and vinyl chloride (VC) were mixed as monomers to be polymerized at a ratio of vinylidene chloride: vinyl chloride = 81:19 (mass ratio), and suspension polymerization was performed with temperature management 3 under conditions with a polymerization initial stage temperature of at most 37°C and a polymerization late stage temperature of from 52 to 54°C. The polymerization time was 38 hours. The polymerization conversion at this time was 82.0%. A total of 4.6 parts by mass of DBS, ATBC, and ESBO were added as additives to 100 parts by mass of this polymerized resin (vinylidene chloride-based copolymer) to form a compound (vinylidene chloride-based copolymer resin composition). The film preparation and evaluations were performed in the same manner as in Comparative Example 3.

[Table 1]

| | VD/VC Composition ratio | Polymerization conversion | Reduced viscosity | Methanol extraction amount | Acetone extraction amount | Acetone extraction amount molecular weight | Extrusion workability - 1 | | | Adhesive strength | Two-layer delamination time | Remarks |
|---|---|---|---|---|---|---|---|---|---|---|---|---|
| | | | | | | | EXT load | Extrusion amount | EXT load fluctuation evaluation | | | |
| | Mass ratio | % | | Mass% | Mass% | Mw | A | g/min | | kg | sec | |
| Working Example 1 | 83/17 | 90.7 | 0.042 | 6.0 | 4.0 | $3.2 \times 10^4$ | 10.9 | 104 | ○ | 0.2 | 23 | |
| Working Example 2 | 82/18 | 90.0 | 0.044 | 6.0 | 4.6 | $3.3 \times 10^4$ | 9.2 | 95 | ○ | 1.4 | 31 | |
| Working Example 3 | 82/18 | 89.9 | 0.045 | 6.0 | 4.7 | $3.1 \times 10^4$ | 9.5 | 94 | ○ | 3.4 | 30 | |
| Working Example 4 | 82/18 | 90.3 | 0.042 | 5.9 | 4.5 | $3.2 \times 10^4$ | 8.7 | 94 | ○ | 3.8 | 52 | |
| Working Example 5 | 82/18 | 91.1 | 0.044 | 5.7 | 5.5 | $3.5 \times 10^4$ | 9.1 | 95 | ○ | 2.9 | 147 | Without adhesives |
| Working Example 6 | 82/18 | 93.6 | 0.044 | 5.9 | 7.9 | $3.6 \times 10^4$ | 9.3 | 99 | ○ | 4.7 | 132 | |
| Comparative Example 1 | 83/17 | 87.0 | 0.042 | 6.2 | 1.1 | $1.4 \times 10^4$ | 10.5 | 84 | × | -[1] | 2 | Large amount of wrinkling at the time of film rolling |
| Comparative Example 2 | 82/18 | 86.4 | 0.043 | 7.4 | 2.1 | $2.3 \times 10^4$ | 8.2 | 86 | × | 0 | 11 | |
| Note 1) Unmeasurable | | | | | | | | | | | | |

[Table 2]

| | VD/VC composition ratio | Polymerization conversion | Reduced viscosity | Methanol extraction amount | Acetone extraction amount | Acetone extraction amount molecular weight | Extrusion workability - 2 | | Adhesive strength Two-layer delamination time | Presence or absence of adhesives | Foreign substance evaluation EXT load fluctuation evaluation |
| | | | | | | | Foreign substance evaluation | EXT load fluctuation evaluation | | | |
| | Mass ratio | % | | Mass% | Mass% | Mw | | | kg | sec | |
| Working Example 7 | 83/17 | 93.0 | 0.050 | 6.1 | 7.0 | $3.5 \times 10^4$ | ○ | ○ | 0.2 | 30 | None |
| Working Example 8 | 82/18 | 91.1 | 0.044 | 8.1 | 5.0 | $3.5 \times 10^4$ | ○ | ○ | 0.2 | 147 | None |
| Working Example 9 | 82/18 | 93.6 | 0.044 | 8.0 | 7.9 | $3.6 \times 10^4$ | ○ | ○ | 0.4 | 132 | None |
| Working Example 10 | 82/18 | 92.0 | 0.044 | 4.5 | 7.0 | $3.5 \times 10^4$ | ○ | ○ | 0.3 | 120 | None |
| Comparative Example 3 | 82/18 | 86.6 | 0.041 | 5.9 | 2.4 | $2.5 \times 10^4$ | × | × | 0 | 6 | None |
| Comparative Example 4 | 82/18 | 86.6 | 0.041 | 8.0 | 2.4 | $2.5 \times 10^4$ | Δ | × | 0 | 8 | None |
| Comparative Example 5 | 81/19 | 82.0 | 0.058 | 4.7 | 2.2 | $2.0 \times 10^4$ | × | × | 0 | 10 | None |

EP 2 905 310 A1

12

All of the Working Example 1 to 10 exhibited excellent extrusion workability and container adhesiveness, and the two-layer delamination time was also sufficient. Although adhesives and tackifiers were not added in Working Example 5 and Working Example 7 to 10, these working examples exhibited excellent container adhesiveness. Comparative Example 1 to 5 yielded a small acetone extraction amount and therefore demonstrated poor extrusion workability, and container adhesiveness was not achieved.

**Claims**

1.  A vinylidene chloride-based copolymer resin composition, wherein upon the resin composition being in the form of a film and upon the film being subjected to methanol extraction and then the film after methanol extraction being subjected to acetone extraction, an acetone extraction amount is 4.0 mass% or greater, and a weight-average molecular weight of the acetone extract is 50,000 or less.

2.  The vinylidene chloride-based copolymer resin composition according to claim 1, wherein the vinylidene chloride-based copolymer resin composition is a vinylidene chloride-vinyl chloride copolymer resin composition.

3.  The vinylidene chloride-based copolymer resin composition according to claim 1 or 2, wherein a methanol extraction amount in the methanol extraction is at most 10.0 mass%.

4.  The vinylidene chloride-based copolymer resin composition according to any one of claims 1 to 3, wherein (1) the polymerization conversion is at least 88% upon the vinylidene chloride content ratio determined by vinylidene chloride/(vinylidene chloride + vinyl chloride) being at least 80 mass% and at most 98 mass%; (2) the polymerization conversion is at least 83% and less than 88% upon the vinylidene chloride content ratio being at least 75 mass% and less than 80 mass%; and (3) the polymerization conversion is at least 75% and less than 83% upon the vinylidene chloride content ratio being at least 70 mass% and less than 75 mass%.

5.  The vinylidene chloride-based copolymer resin composition according to any one of claims 1 to 4, wherein a weight-average molecular weight of the acetone extract is at least 26,000.

6.  The vinylidene chloride-based copolymer resin composition according to any one of claims 1 to 5, the composition being a resin composition for a wrap film.

7.   A molded product such as a film, sheet, or fiber containing the vinylidene chloride-based copolymer resin composition described in any one of claims 1 to 6.

**INTERNATIONAL SEARCH REPORT**

| International application No. |
| --- |
| PCT/JP2013/075009 |

A. CLASSIFICATION OF SUBJECT MATTER
*C08L27/08*(2006.01)i, *C08F214/08*(2006.01)i

According to International Patent Classification (IPC) or to both national classification and IPC

B. FIELDS SEARCHED

Minimum documentation searched (classification system followed by classification symbols)
C08L27/08, C08F214/08

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 54-023693 A  (Kureha Chemical Industry Co., Ltd.), 22 February 1979 (22.02.1979), claims; examples (Family: none) | 1-7 |
| X | JP 53-058592 A  (Kureha Chemical Industry Co., Ltd.), 26 May 1978 (26.05.1978), claims; examples (Family: none) | 1-7 |

☒  Further documents are listed in the continuation of Box C.  ☐  See patent family annex.

| | |
| --- | --- |
| *      Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    03 October, 2013 (03.10.13) | Date of mailing of the international search report<br>    12 November, 2013 (12.11.13) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2013/075009

C (Continuation).  DOCUMENTS CONSIDERED TO BE RELEVANT

| Category* | Citation of document, with indication, where appropriate, of the relevant passages | Relevant to claim No. |
|---|---|---|
| X | JP 2002-531603 A  (Solvay),<br>24 September 2002 (24.09.2002),<br>claims; examples<br>& EP 1141052 A1          & WO 2000/032659 A1<br>& BE 1012318 A          & AU 1657000 A<br>& BR 9915891 A          & CA 2353715 A<br>& CN 1333789 A          & RU 2001117853 A | 1-7 |
| X | JP 2002-531604 A  (Solvay),<br>24 September 2002 (24.09.2002),<br>claims; examples<br>& EP 1141053 A1          & WO 2000/032660 A1<br>& BE 1013023 A          & AU 1779000 A<br>& BR 9915887 A          & CA 2353881 A<br>& CN 1334829 A          & MX PA01005500 A | 1-7 |
| X | JP 62-095306 A  (Toagosei Chemical Industry Co.,<br>Ltd.),<br>01 May 1987 (01.05.1987),<br>claims; examples<br>(Family: none) | 1-7 |
| X | JP 2002-128980 A  (Asahi Kasei Corp.),<br>09 May 2002 (09.05.2002),<br>claims; examples<br>(Family: none) | 1-7 |
| X | JP 8-041217 A  (Asahi Chemical Industry Co.,<br>Ltd.),<br>13 February 1996 (13.02.1996),<br>claims; examples<br>(Family: none) | 1-7 |
| X | JP 10-025387 A  (Asahi Chemical Industry Co.,<br>Ltd.),<br>27 January 1998 (27.01.1998),<br>claims; examples<br>(Family: none) | 1-7 |
| X | JP 7-179703 A  (Asahi Chemical Industry Co.,<br>Ltd.),<br>18 July 1995 (18.07.1995),<br>claims; examples<br>& US 5446101 A          & EP 639617 A1<br>& WO 1994/020572 A1      & DE 69404574 D<br>& DE 69404574 T          & ES 2104357 T | 1-7 |
| X | JP 8-239536 A  (Asahi Chemical Industry Co.,<br>Ltd.),<br>17 September 1996 (17.09.1996),<br>claims; examples<br>(Family: none) | 1,3-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1171492 A
- JP H07179703 A
- JP H1087876 A
- JP H10324809 A